# EUROPEAN PATENT APPLICATION

(11) **EP 2 016 877 A1**
(43) Date of publication of application: **21.01.2009**
(21) Application number: 07112843.3
(22) Date of filing: 20.07.2007
(51) Int. Cl.: A47J 31/06

(54) **Filter holder for coffee machines**

(71) Applicant: Atzori, Bruno, Hunghorn, Kowloon, Hong Kong (HK)
(72) Inventor: Atzori, Bruno, Hunghorn, Kowloon, Hong Kong (HK)
(74) Representative: Pizzoli, Antonio

(57) **Abstract**

A filter-holder (1) for coffee machines (M), which is provided with a cavity (1b) suitable for receiving a filter (2) for powdered coffee and with a lever arm (7) suitable for protruding outside a coffee machine (M), wherein at least one discharge opening (8) connects the cavity (1b) with a channel (9) longitudinally crossing at least one portion of the lever arm (7) and ending in at least one dispensing opening (10) arranged in the lever arm (7).

## Description

The present invention relates to a filter-holder for coffee machines and particularly to a filter-holder that can be used also with different coffee pods and/or cartridges.

Coffee making machines are known, which use filter-holders for powdered coffee in bulk or contained in pods and/or cartridges. Generally, coffee powder is contained in pods or cartridges that are inserted into a filter, which is, in turn, inserted into a filter-holder provided with one or more dispensing openings at the bottom. The filter-holder has one or more radial protrusions on its peripheral wall, such as for example thread profiles, allowing it to be fixed onto the machine body in correspondence to a hot water outlet by screwing. In order to enable the assembling and disassembling to the machine body, the filter-holder is provided with a lever arm with a handle protruding outside the machine. Hot water under pressure dispensed from the machine passes through the coffee, which is directly collected into the cup or the cups arranged under the filter-holder. In order to ensure the seal between the filter and the machine body during the passage of hot water, a gasket is generally arranged at the water outlet, e.g. a silicon ring, which is pressed between the filter and the machine body upon blocking of the filter-holder.

A problem of known coffee machines of the above-described type is that the space between the machine base and the dispensing openings at the bottom of the filter-holder is sized for receiving only coffee cups or containers substantially having an equal height. Thus, it is necessary to resort to the pouring of coffee whenever containers of a greater height must be used, with a consequent risk of bums and soiling of the surrounding surfaces.

Another drawback of coffee machines using pods and/or cartridges is that the filter-holder and the filter are dimensioned for one size of pod and/or cartridge only. Therefore, a user is obliged to buy one single type of pod or cartridge and thus substantially one single quality of coffee.

It is therefore an object of the present invention to provide a filter-holder for a coffee machine, which is free from such disadvantages. Said object is achieved with a filter-holder, whose main features are disclosed in the first claim, while other features are disclosed in the remaining claims.

The filter-holder according to the present invention has a closed bottom and has a discharge opening in its lateral wall, which communicates its internal cavity with a channel, which longitudinally crosses at least one portion of the lever arm ending in at least one dispensing opening made in the lever arm itself, in particular in correspondence to its free end. Coffee dispensing occurs outside the machine, thus making it possible to arrange a cup or another container completely outside the coffee machine and allowing to use containers that are larger than coffee cups and that otherwise could not be inserted into the typical space formed under the filter-holder.

An advantage of the filter-holder according to the present invention is that, since the space for positioning a cup under the filter-holder is no longer necessary, it is possible to accomplish a coffee making machine having a remarkably reduced size, particularly in height, with consequent lower manufacturing, packaging and shipping costs.

Another advantage offered by the present invention is that the filter-holder allows to use a plurality of pods and/or cartridges of a different size by mounting adapting means of the particular pod or cartridge.

Consequently, a user is no longer bound to a particular size of pod and/or cartridge, but is free to choose the pod and/or cartridge and therefore the quality of coffee he or she prefers or that is available when buying.

Further advantages and features of the filter-holder according to the present invention will become clear to those skilled in the art from the following detailed and non-limiting description of an embodiment thereof with reference to the attached drawings, wherein:
- figure 1 shows a schematic top view of the filter-holder assembled to a generic coffee machine;
- figure 2 shows section II-II of figure 1;
- figure 3 shows detail III of figure 2; and
- figure 4 shows an exploded sectional view of the filter-holder of figure 1.

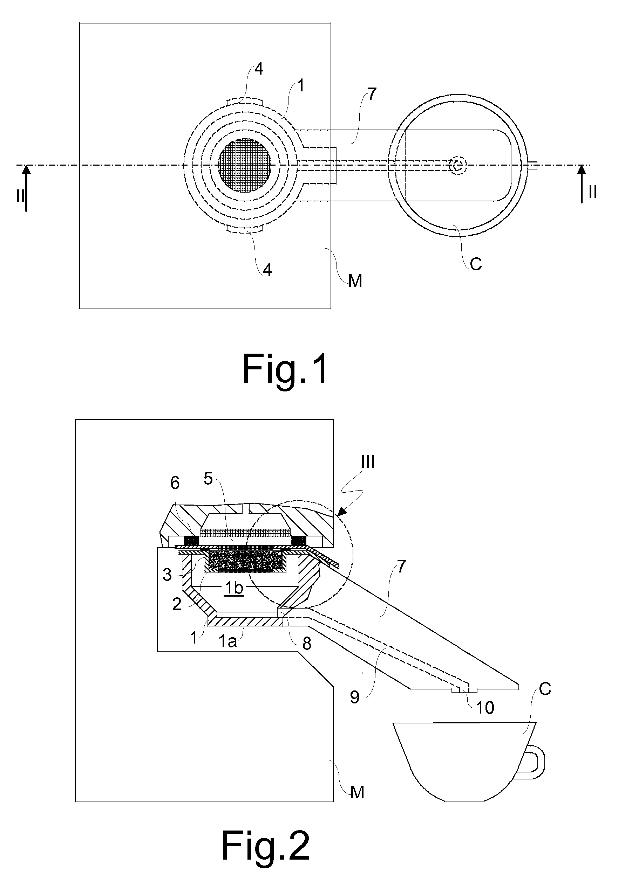

Figures 1 and 2 schematically show filter-holder 1 according to the present invention assembled to a generic coffee making machine M. Filter-holder 1 houses in a known way a filter 2 inserted therein and suitable for receiving coffee powder generally contained in a pod or a cartridge 3. Filter-holder 1 is provided with means 4 for blocking it to the body of machine M in correspondence to a hot water outlet 5, suitably provided with a sealing member 6, and with a lever arm 7 protruding outside machine M and suitable for allowing its blocking movement by a user. Blocking means 4 may be, for example, one or more thread profiles arranged on the peripheral external wall of filter-holder 1.

According to the present invention, bottom 1a of filter-holder 1 is closed, i.e. free from the typical dispensing openings, and its lateral wall has at least one discharge opening 8 that is arranged in proximity to bottom 1a and connects cavity 1b, housing filter 2, to a channel 9 longitudinally crossing at least one portion of lever arm 7 of filter-holder 1. Channel 9 ends in at least one dispensing opening 10 made in lever arm 7, in particular in correspondence to its free end, so that dispensing opening 10 may be arranged over a cup or container C arranged outside machine M.

In order to ease the inlet of coffee dripping onto bottom 1a of filter-holder 1 into channel 9, bottom 1a may be slightly inclined towards discharge opening 8, e.g. at an angle comprised between 3° and 5°.

Channel 9 consists of a silicon tube suitably connected to discharge opening 8 and dispensing opening 10.

In order to allow an effective dispensing of coffee, lever arm 7 is inclined downwardly at an angle comprised, for instance, between 30° and 40°.

In a preferred embodiment of the present invention, filter-holder 1 also comprises adapting means for pod or cartridge 3, allowing to use a plurality of pods and/or cartridges of different sizes.

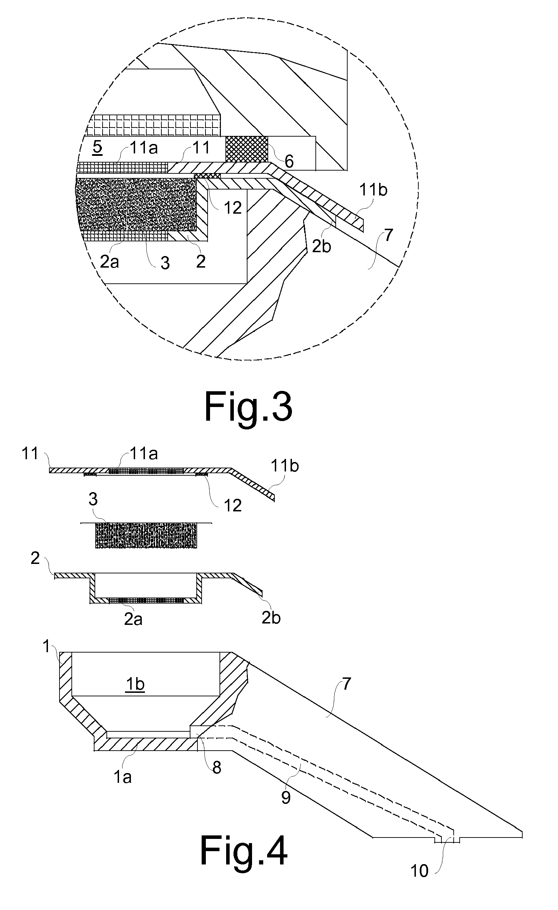

As shown in particular in figures 3 and 4, such adapting means comprise a filter 2 of a substantially cylindrical or frustum-conical shape having a size corresponding to the particular pod or cartridge 3 used, and a filter-cover 11 arranged on filter 2 so as to completely enclose pod or cartridge 3 inserted therein. In order to enable the passage of water towards the pod or cartridge 3, filter-cover 11 is provided with a perforated plate 11a. A ring gasket 12 is arranged on the surface of filter-cover 11 facing filter 2, in order to ensure the seal between filter 2 and filter-cover 11.

According to the present invention, in order to adapt the most common sizes of coffee pods or cartridges available in the market to filter-holder 1, a plurality of pairs of filter 2 and filter-cover 11 of different shapes are provided.

Filter 2 and filter-cover 11 have suitably shaped radial protrusions or grips 2b, 11b, respectively, which allow an easy assembling and disassembling of filter 2 and filter-cover 11 on filter-holder 1.

In addition, it is possible to provide for centering profiles along the perimeter of filter 2 and filter-cover 11, suitable for facilitating the assembling and the aligning of one part onto the other and for easing the maintaining of the mutual position during the blocking of filter-holder 1 onto the body of machine M.

In order to ensure a good seal between filter 2 and filter-cover 11 and to allow an effective extraction of coffee, ring gasket 12 has an internal diameter substantially corresponding to the diameter of pod or cartridge 3 inserted between filter 2 and filter-cover 11. Suitable materials for the manufacturing of ring gasket 12 are, for example, silicon and other rubbers for alimentary use resistant to high temperatures.

Once blocked filter-holder 1, filter-cover 11 is pressed against sealing member 6 arranged around outlet 5 and hot water will be forced to pass through perforated plate 11 a and pod or cartridge 3 thus extracting coffee therefrom, then coming out through filter 2, which is provided, as it is known, with a perforated plate 2a as well. Then, as described above, coffee drips onto bottom 1a of filter-holder 1 and is transported towards dispensing opening 10 through channel 9.

Possible modifications and/or additions may be made by those skilled in the art to the hereinabove disclosed and illustrated embodiment while remaining within the scope of the following claims.

## Claims

1. A filter-holder (1) for coffee machines (M), which is provided with a cavity (1b) suitable for receiving a filter (2) for powdered coffee and with a lever arm (7) suitable for protruding outside a coffee machine (M), **characterized in that** at least one discharge opening (8) connects the cavity (1b) with a channel (9) longitudinally crossing at least one portion of the lever arm (7) and ending in at least one dispensing opening (10) arranged in the lever arm (7).

2. A filter-holder (1) according to the previous claim, **characterized in that** the bottom (1a) of the cavity (1b) is closed and inclined towards said discharge opening (8), which is made in the lateral wall of the cavity (1b).

3. A filter-holder (1) according to one of the previous claims, **characterized in that** the dispensing opening (10) is made at the free end of the lever arm (7).

4. A filter-holder (1) according to one of the previous claims, **characterized in that** said channel (9) is a silicon tube arranged in the lever arm (7).

5. A filter-holder (1) according to one of the previous claims, **characterized in that** the lever arm (7) is inclined downwards.

6. A filter-holder (1) according to one of the previous claims, **characterized by** comprising adapting means (2, 11) of a coffee pod or a cartridge (3) in the filter (2).

7. A filter-holder (1) according to the previous claim, **characterized in that** said adapting means (2, 11) comprise a filter (2) of a size corresponding to a pod or cartridge (3) and a filter-cover (11) arranged above the filter (2) in order to cover the pod or cartridge (3) inserted in the filter (2).

8. A filter-holder (1) according to the previous claim, **characterized in that** the filter-cover (11) is provided with a perforated plate (11a), suitable for allowing the passage of water towards the pod or cartridge (3), and with a ring gasket (12), which is arranged on the surface of the filter-cover (11) facing the filter (2) in order to ensure the seal between the filter (2) and the filter-cover (11).

9. A filter-holder (1) according to claim 7 or 8, **characterized by** comprising a plurality of interchangeable pairs of filter (2) and filter-cover (11).

10. A filter-holder (1) according to one of claims 7 to 9, **characterized in that** the filter (2) and the filter-cover (11) have radial protrusions or grips (2b, 11b), respectively.

11. A filter-holder (1) according to one of claims 7 to 10, **characterized in that** the filter (2) and the filter-cover (11) are respectively provided with centering profiles arranged along their perimeter for facilitating the assembling and the aligning of one part onto the other and for easing the maintaining of the mutual position during the blocking of the filter-holder (1) onto the body of the machine (M).

12. A coffee machine (M), **characterized by** comprising a filter-holder (1) according to one of the previous claims.
